# EUROPÄISCHE PATENTSCHRIFT

(11) **EP 4 421 003 B1**
(45) Veröffentlichungstag und Bekanntmachung des Hinweises auf die Patenterteilung: **01.04.2026**
(21) Anmeldenummer: 24159006.6
(22) Anmeldetag: 22.02.2024
(51) Int. Cl.: B65G 1/14

(54) **STAPELSÄULE ZUR LAGERUNG VON KRAFTFAHRZEUG-ELEKTROBATTERIEN**
STACKING COLUMN FOR THE STORAGE OF ELECTRIC MOTOR VEHICLE BATTERIES
COLONNE D'EMPILEMENT POUR LE STOCKAGE DE BATTERIES ÉLECTRIQUES DE VÉHICULE AUTOMOBILE

(30) Priorität: 22.02.2023 DE 102023104336; 15.02.2024 DE 102024104302
(43) Veröffentlichungstag der Anmeldung: 28.08.2024
(73) Patentinhaber: MTS Maschinenbau GmbH, 88512 Mengen (DE)
(72) Erfinder: Laible, Eckhard, 71144 Leinfelden-Schlechtenmühle (DE)
(74) Vertreter: Patentanwälte und Rechtsanwalt Weiß, Arat & Partner mbB

(56) Entgegenhaltungen:
- EP-A1- 1 505 010
- US-A- 5 938 051
- US-A1- 2019 077 602

## Beschreibung

### Technisches Gebiet

Die Erfindung betrifft eine Stapelsäule zur Lagerung von Kraftfahrzeug-Elektrobatterien nach dem Oberbegriff des Anspruchs 1.

### Stand der Technik

Derartige Stapelsäulen dienen insbesondere in der Automobilindustrie dazu, Blechteile, die aus einer Formanlage kommen und zur Weiterverarbeitung transportiert werden müssen, zwischenzulagern.

In diesem Zusammenhang wird auf die DE 93 18 410 U1 hingewiesen. Dort ist eine Stapelsäule offenbart, bei der die Klinkenhebel mit Federmitteln versehen sind, die sie unbelastet aus ihrer Abstütz- in ihre Fang- bzw. in ihre Ruhestellung überführen, wobei als Drehanschlag für die Haltearme der Klinkenhebel in der Arretierstellung im Turmkörper quer verlaufende Anschlagzapfen vorgesehen sind, und daß die Klinkenhebel untereinander gleichartig sind und daß der Tragarm und der Haltearm von gleicher Breite sind und miteinander fluchten. Nachteilig an den Anschlagzapfen ist aber, dass die im Profil kreisrunden Anschlagzapfen bei hohen Gewichten und den beim Transport hinzutretenden Beschleunigungskräften in der Praxis immer wieder brechen, biegen oder zum Verbiegen der Klinkenhebel geführt haben.

Eine ähnliche Konstruktion zeigt auch die DE 29 30 053 A1. Dort kommen ebenfalls kreisrunde Lagerbolzen zum Einsatz, die tatsächlich sogar nur nach Bedarf in entsprechende Seitenwandungen geschoben werden, um eine Unterstützung zu liefern, und zwar ebenfalls nur im rückwärtigen Bereich der Klinke. Auch hier führen hohe Gewichte zu den oben beschriebenen Nachteilen.

Weiter wird auf die DE 298 08 971 U1 verwiesen, die ein stoßabsorbierendes und elastisches Material aus Kunststoff oder Gummi an den Klinkenhebeln selbst vorsieht, um jeweils die entstehenden Kräfte aufnehmen zu können. Dies ist bei Schwerlastgütern von mehreren hundert Kilo bis hin zu mehreren Tonnen an Gewicht nicht realisierbar, da die Menge an stoßabsorbierendem Material aus Kunststoff oder Gummi viel zu groß wäre, um tatsächlich ein solch schweres Ladegut beispielsweise für einen Transport zu sichern.

Dabei gibt es senkrechte Stapelsäulen aber auch waagrechte oder schräge, die gleichfalls der vorliegenden Erfindung unterliegen sollen.

Für das Bestücken derartiger Stapelsäulen haben sich Klinken als sehr praktikabel erwiesen, die so miteinander verbunden sind, dass sie beim Befüllen der Stapelsäule bzw. eines Gestells mit diesen Stapelsäulen aus einer Ruhelage in eine Arbeitslage bewegt werden. Dies beginnt meist durch das Belegen der untersten Klinke mit einem Werkstück, welches die unterste Klinke damit in Arbeitslage dreht. Durch dieses Drehen nimmt die unterste Klinke die nächstfolgende Klinke in eine Bereitschaftsstellung, in der diese das nächste Lagergut aufnehmen kann. Durch die Aufnahme des nächsten Lagerguts wird wiederum die nachfolgende Klinke in Bereitschaftsstellung gedreht. Ausserhalb der Bereitschaftsstellung und der Arbeitslage befinden sich die Klinken in Ruhelage zwischen beispielsweise zwei Seitenwangen der Stapelsäule.

Eine derartige Stapelsäule ist beispielsweise in der DE 20 2020 104 669 U1 beschrieben.

Weiter wird auf die EP 1 505 010 A1 hingewiesen. Dort ist eine automatisierte Struktur zum Lagern und Handhaben von Produkten offenbart, die aus einer Vielzahl von miteinander verbundenen Regalgliedern besteht, die in einer Säule angeordnet sind und so gestaltet sind, dass sie Produkte aufnehmen können, die darauf gelagert werden. Mechanische Verbindungsmittel sind vorgesehen, die eine wechselseitige Bewegung der Regalglieder in einer Abfolge, eines nach dem anderen, ermöglichen. Diese Bewegung umfasst eine horizontale Position, in der das Produkt auf dem Regalglied gelagert ist, eine Zwischenposition zum Aufnehmen des Produkts und eine fast vertikale Ruheposition.

Weiter wird auf die US 2019/0077602 A1 hingewiesen, die eine Stapelsäule zum Stapeln und Transportieren von aufeinander gestapelten und vertikal getrennten Artikeln umfasst eine Vielzahl von übereinander angeordneten schwenkbaren Halterungen, die geeignet sind, die Artikel zu stützen und mit entsprechenden Gegengewichten verbunden sind. Der mittlere Abschnitt jeder Halterung verfügt über ein Paar Ösen für einen Drehzapfen und ein Paar Anschlagflossen, die in entsprechende Nuten eingefügt sind, die am Körper der Säule vorgesehen sind. Der hintere Abschnitt jeder Halterung ist mit mindestens einem seitlichen Ansatz versehen, der mit zwei Gegengewichten gekoppelt ist. Eines der Gegengewichte ist mit dem seitlichen Ansatz der darunterliegenden Halterung verbunden, das andere mit dem seitlichen Ansatz der darüberliegenden Halterung.

### Aufgabe der Erfindung

Die Aufgabe der vorliegenden Erfindung ist es, eine Stapelsäule zu schaffen, welche insbesondere zur Aufnahme und Lagerung von sehr schweren Schwerlastgüter, insbesondere zur Lagerung von Kraftfahrzeug-Elektrobatterien geeignet ist.

### Lösung der Aufgabe

Zur Lösung der Aufgabe führt der kennzeichnende Teil des Anspruchs1.

Dies hat den Vorteil, dass die Klinke quasi zwischen Anschlag und Auflage verspannt wird und damit die Achse, um welche die Klinke dreht, wesentlich entlastet wird. Die Achse dient nur noch als Wippe, welche das Gewicht der Kraftfahrzeug-Elektrobatterie auf dem Tragteil über das Rückteil der Klinke auf den Anschlag überträgt. Der hier beschriebene Effekt wird im Rahmen der Erfindung derart beschrieben, dass die Achse im Wesentlichen oder ganz gewichtsfrei gestellt wird.

Diese Entlastung der Achse bewirkt einen wesentlich verringerten Verschleiss der gesamten Stapelsäule. Diese Stapelsäule ist ohne weiteres geeignet, Ladegut mit einem Gewicht von 650-1200 Kilo je Kraftfahrzeug-Elektrobatterie aufzunehmen. Dabei können bis zu fünf Kraftfahrzeug-Elektrobatterien mit jeweils über 1000 Kilo in einer Anordnung von vier bis acht Stapelsäulen getragen und für einen Transport gesichert werden.

Die Stapelsäule dient zur Lagerung von Kraftfahrzeug-Elektrobatterien übereinander oder nebeneinander auf oder an Klinken, wobei die Klinken in einem U-Körper aufgenommen sind und der U-Körper zwei Seitenwangen, eine Rückwand und eine Öffnungskante aufweist, wobei die Klinken um Achsen von einer Ruhelage in Arbeitslage zwischen den zwei Seitenwangen drehen und einerseits der Achse ein Tragteil und andererseits der Achse ein Rückteil aufweisen.

Öffnungskante beschreibt die Kante der Seitenwangen, welche von der Rückwand weg sich als Ende der Seitenwangen darstellt.

Die Anforderungen zur Sicherung von Kraftfahrzeug-Elektrobatterien sind sehr hoch und nicht mit den bisher im Automobil-Herstellungsprozess verwendeten Bauteilen vergleichbar. Eine solche Kraftfahrzeug-Elektrobatterie wiegt regelmäßig zwischen 650 kg bis 1200 kg pro Stück. Bei einer Stapelung von vier großen Kraftfahrzeug-Elektrobatterie mit den dazugehörigen Beschleunigungskräften wirken oft mehr als 6 t auf die Stapelsäulen und die Klinken. Trotz aller Entwicklungen im Bereich der Kraftfahrzeug-Elektrobatterien handelt es sich um sehr empfindliche Bauteile, die bei unsachgemäßer Lagerung oder Sicherung nicht nur zu Beschädigungen an dem Bauteil selbst, sondern wegen der Brand- und Explosionsgefahr auch an anderen Rechtsgütern zu Schaden führen kann.

Daher bedarf es auch einer besonderen Unterstützung der Klinke, die die Kraftfahrzeug-Elektrobatterie beispielsweise während des Transports in Arbeitslage hält und sichert. Dazu wird das Rückteil der Klinke gegen einen Anschlag in Form eines Mehrkantbolzen-Anschlags oder Rundbolzen-Anschlags abgestützt, wobei der Mehrkantbolzen-Anschlag oder der Rundbolzen-Anschlag zwischen den beiden Seitenwangen an der Rückwand angeordnet ist und zusätzlich in Arbeitslage das Tragteil der Klinke auf einem Auflager in Form eines Mehrkantbolzen-Auflagers oder eines Rundbolzen-Auflagers aufliegt, wobei das Mehrkantbolzen-Auflager oder das Rundbolzen-Auflager zwischen den beiden Seitenwangen an der Öffnungskante angeordnet ist. Dazu wird der Anschlag und das Auflager in der Regel zwischen den beiden Seitenwangen verschweisst bzw. gefügt. Im Weiteren sollen die Ausführungen zum Mehrkantbolzen-Auflager und dem Mehrkantbolzen-Anschlag auch für die Variante als Rundbolzen-Auflager und Rundbolzen-Anschlag gelten.

Dadurch ist die Konstruktion dazu geeignet, das Tragteil der Klinken in Arbeitslage in einem Unterbereich durch das Mehrkantbolzen-Auflager zu unterstützen, wobei gleichzeitig der Mehrkantbolzen-Anschlag in einem Oberbereich des Rückteils der Klinken stützend anliegt.

Auf die Weise können aufkommende Kräfte optimal von der Klinke an das Mehrkantbolzen-Auflager und den Mehrkantbolzen-Anschlag weitergegeben und über das U-Profil abgeleitet werden. Dazu kann das U-Profil quasi beliebig in der Materialstärke verstärkt und quasi als Doppel-T-Träger ausgeführt werden.

Der U-Körper, die Klinken, und deren Achse, sowie der Mehrkantbolzen-Anschlag, und das Mehrkantbolzen-Auflager bestehen dabei aus einem metallenen Werkstoff mit entsprechend vorgesehener Legierung.

Das Mehrkantbolzen-Auflager und/oder der Mehrkantbolzen-Anschlag jeweils eine einzige Anliegefläche aufweisen, geeignet zur Stützung der Klinken in Arbeitslage. Dabei kann die Anliegefläche auf die Struktur des Unterbereichs des Tragteils derart angepasst sein, dass eine möglichst große Oberfläche des Tragteils und der Anliegefläche ermöglicht wird.

Zusätzlich kann die Anliegefläche glatt oder verrippt sein. Eine Verrippung kann beispielsweise zu einer zusätzlichen Versteifung des Mehrkantbolzen-Auflagers und/oder des Mehrkantbolzen-Anschlags führen.

Der Mehrkantbolzen-Anschlag und/oder das Mehrkantbolzen-Auflager kann als Vierkantbolzenprofil oder Dreikantbolzenprofil ausgebildet sein. Es sind auch weitere Mehrkantbolzenprofile möglich. Wichtig ist in diesem Zusammenhang eine möglichst große Kontaktfläche entsteht, um eine entsprechende Kraftaufnahme zu ermöglichen

Bevorzugt sind Mehrkantbolzen-Anschlag und Mehrkantbolzen-Auflager ebenfalls wie die Achse und die Klinke zwischen den beiden Seitenwangen angeordnet. Natürlich wäre es auch möglich, dass Mehrkantbolzen-Anschlag und Mehrkantbolzen-Auflager von außen durch die Seitenwangen gesteckt werden, allerdings muss dann ein zusätzlicher Aufwand für die geeignete Festlegung von Mehrkantbolzen-Anschlag und Mehrkantbolzen-Auflager getroffen werden.

Wie Mehrkantbolzen-Anschlag und Mehrkantbolzen-Auflager in oder an den Seitenwänden festgelegt werden, ist von untergeordneter Bedeutung. Bevorzugt wird allerdings, dass Mehrkantbolzen-Anschlag und Mehrkantbolzen-Auflager in die Seitenwangen eingelassen sind, so dass keine zusätzlichen Befestigungsmittel notwendig werden. Es genügt dabei, die Seitenwangen von jeder Seite her etwas einzuschneiden bzw. auszuklinken. Hierdurch wird auch das Herstellungsverfahren wesentlich vereinfacht. Aus diesem Grunde ist auch vorgesehen, dass Mehrkantbolzen-Anschlag und/oder Mehrkantbolzen-Auflager als Vierkant ausgebildet sind, so dass sie einfach in die Ausklinkungen eingeschoben werden können.

Wichtig und besonders bevorzugt wird, dass Mehrkantbolzen-Anschlag und Mehrkantbolzen-Auflager in Ebenen zueinander angeordnet sind, deren Abstand einer Dicke der Klinke entspricht. Damit wird das Spiel bzw. auch die räumliche Lage der Klinke festgelegt.

Da es sich um schwere Schwerlastgüter handelt, ist bevorzugt vorgesehen, dass dem Tragteil frontwärtig ein Puffer aufgesetzt wird. Dieser Puffer kann je nach Anforderung der Kraftfahrzeug-Elektrobatterie ausgetauscht und durch eine vom Material und von der räumlichen Ausgestaltung her geeigneten Puffer für die jeweilige Kraftfahrzeug-Elektrobatterie ersetzt werden.

Das Drehen der Klinke von einer Arbeitslage in eine Bereitschaftsstellung und in eine Ruhelage bzw. umgekehrt ist aus dem Stand der Technik wohl bekannt. Hierzu wird insbesondere auf die im Stand der Technik genannte Schrift verwiesen.

Die Rückführung der Klinken in ihre jeweilige Ausgangslage erfolgt bevorzugt durch einen einfachen Kraftspeicher, beispielsweise durch eine Schraubenfeder, welche einerseits mit der Klinke und andererseits mit der Seitenwange verbunden ist.

Im vorliegenden Fall ist auch vorgesehen, in die Rückwand zumindest eine größere Ausnehmung einzuformen, damit die Stapelsäule beispielsweise von einem Kran gehändelt werden kann. Diese Ausnehmung oder auch weitere Ausnehmungen können dazu benutzt werden, dass mit einem Sensor, beispielsweise mit einem Laser, abgefragt wird, ob die entsprechende Klinke beladen ist.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Ansicht eines erfindungsgemässen Stapelsäule;
Figur 2 eine Seitenansicht der Stapelsäule gemäss Figur 1;

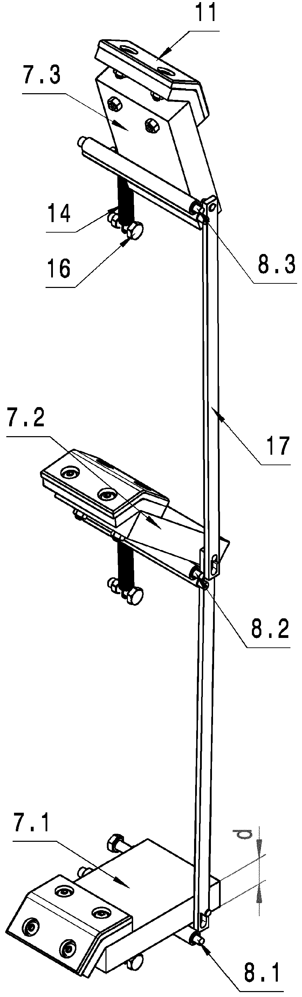

Figur 3 eine perspektivische Ansicht eines Gestänges mit Klinken in der Stapelsäule gemäss Figur 1.

### Ausführungsbeispiel

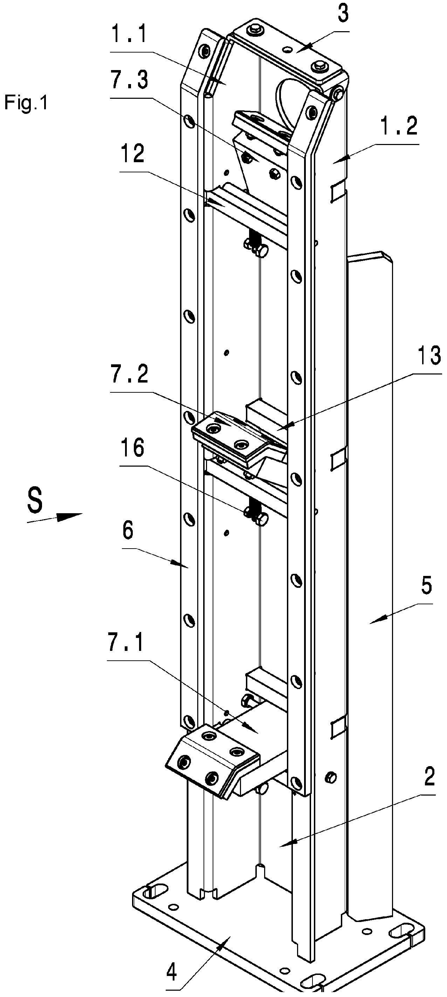

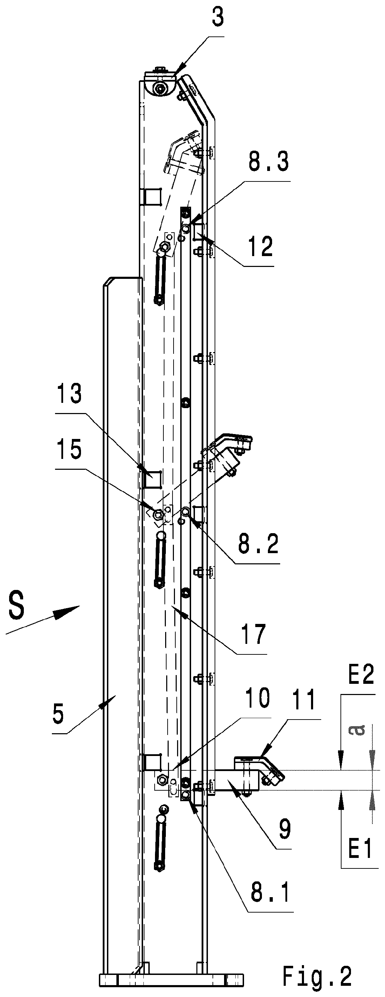

Eine Stapelsäule S gemäss den Figuren 1 und 2 weist zwei Seitenwangen 1.1 und 1.2 auf, die über eine Rückwand 2 zu einem U-förmigen Profil verbunden sind. Ein gewünschter Abstand der beiden Seitenwangen 1.1 und 1.2 wird ferner durch eine obere Traverse 3 und eine untere Fußplatte 4 gesichert. An die Rückwand 2 ist ein Schutzstreifen 5 angesetzt. Ferner ist der Seitenwange 1.1 ein Gleitstreifen 6 zugeordnet.

Zwischen den beiden Seitenwangen 1.1 und 1.2 befinden sich drei Klinken 7.1, 7.2 und 7.3 als Auflage für nicht näher gezeigte Kraftfahrzeug-Elektrobatterien. Jede Klinke 1.1 bis 1.3 dreht um eine Achse 8.1 bis 8.3 von einer Ruhelage in eine Bereitschaftsstellung bzw. in eine Arbeitslage. Die Klinke 7.3 befindet sich in der Ruhelage, die Klinke 7.2 in der Bereitschaftsstellung und die Klinke 7.1 in der Arbeitslage. Dabei sind die Klinken 7.1 bis 7.3 über ein Gestänge 17 miteinander verbunden, welches durch die einzelnen Verbindungsteile und entsprechende Langlöcher bewirkt, dass beim anfänglichen Beladen der Klinke 7.1 diese von einer Bereitschaftsstellung in eine Arbeitslage gelangt und dabei die mittlere Klinke 7.2 über das Gestänge 17 mitnimmt und die Klinke 7.2 in Bereitschaftsstellung versetzt. Beim Beladen der Klinke 7.2 durch ein Ladegut nimmt diese Klinke beim Drehen um ihre Achse 8.2 die obere Klinke 7.3 mit, so dass diese in Bereitschaftsstellung gelangt. Die entsprechenden Bewegungen und Ausgestaltungen des Gestänges sind insbesondere in der DE 20 2020 104 669 U1 beschrieben.

Die Klinken 1.1 bis 1.3 selbst teilen sich einerseits der Achsen 8.1 bis 8.3 in ein Tragteil 9 und andererseits ein Rückteil 10 auf. Dem Tragteil 9 ist dabei frontwärtig noch ein Puffer 11 aufgesetzt, welcher der weiteren Abstützung der Kraftfahrzeug-Elektrobatterie dient. Bevorzugt ist dieser Puffer 11 je nach Kraftfahrzeug-Elektrobatterie austauschbar.

Unter jeder Klinke 7.1 bis 7.3 bzw. deren Tragteil 9 befindet sich ein Mehrkantbolzen-Auflager 12, auf dem das Tragteil 9 in Arbeitslage aufliegt, so dass es ausreichend abgestützt wird. Hierzu ist dieses Mehrkantbolzen-Auflager 12 bevorzugt seitlich in die Seitenwangen 1.1 bzw. 1.2 eingelassen, wobei es selbstverständlich auch eine anders geartete Abstützung finden kann.

Dem Rückteil 10 ist dagegen ein rückwärtiger Mehrkantbolzen-Anschlag 13 zugeordnet, der bevorzugt ebenfalls in die Seitenwangen 1.1 bzw. 1.2 eingelassen ist und sich nahe oder an der Rückwand 2 befindet.

Die Rückführung der einzelnen Klinken 7.1 bis 7.3 in ihre jeweiligen Ausgangslagen wird durch als Schraubenfedern 14 ausgebildete Kraftspeicher 14 unterstützt, die einerseits in einen Bolzen 15 an dem Rückteil 10 und andererseits in eine Befestigung 16 an der Seitenwange 1.1 bzw. 1.2 eingehängt sind.

Dabei ist die jeweilige Achse 8.1 bis 8.3 derart zu dem Mehrkantbolzen-Auflager 12 und der Mehrkantbolzen-Anschlag 13 an der Klinke 7.1 bis 7.3 angeordnet, dass die jeweilige Achse möglichst keinen gefährdenden Kräften der Elektrobatterie ausgesetzt ist. Das wiederum definiert den Umstand, dass die Klinke 7.1 bis 7.3 im Wesentlichen gewichtsfrei gestellt wird.

Die Funktionsweise der vorliegenden Erfindung ist folgende:
In der Regel ist eine Mehrzahl von Stapelsäulen im Dreieck oder in einem Rechteck aufgestellt, wobei sie einen Aufnahmeraum für ein Ladegut, im vorliegenden Fall insbesondere einem schweren Ladegut, bilden. Die Klinken greifen in die lichte Weite dieses Aufnahmeraums ein, um das Ladegut zwischen den Stapelsäulen zu halten.

In Ausgangslage befinden sich die unteren Klinken 7.1 in der für die Klinken 7.2 gezeigten Bereitschaftsstellung, während die anderen Klinken sich in Ruhelage zwischen den jeweiligen Seitenwangen 1.1 bzw. 1.2 befinden. Wird nun das Ladegut zwischen die Stapelsäulen eingesetzt, so nimmt es die Klinke 7.1 von der Bereitschaftsstellung in die Arbeitslage mit. Die Klinke 7.1 nimmt dabei über das Gestänge 17 die nachfolgende Klinke 7.2 in Bereitschaftsstellung mit. Wird diese nächste Klinke 7.2 beladen, so nimmt sie über das Gestänge 17 die nachfolgende Klinke 7.3 von der Ruhelage in die Bereitschaftsstellung mit.

Gemäss der vorliegenden Erfindung sind allerdings die Klinken 7.1 bis 7.3 in Arbeitslage gesichert abgestützt und zwar durch das Mehrkantbolzen-Auflager 12 und den Mehrkantbolzen-Anschlag 13. Zu diesem Zweck sind das Mehrkantbolzen-Auflager 12 und der Mehrkantbolzen-Anschlag 13 in einem solchen Abstand a ihrer beiden Ebenen E1 und E2 angeordnet, dass die Klinke 7.1 bis 7.3 zwischen Mehrkantbolzen-Auflager 12 und Mehrkantbolzen-Anschlag 13 verspannt wird. Bevorzugt entspricht der Abstand a einer Dicke d der Klinke 7.1 bis 7.3.

Der Vorteil der vorliegenden Erfindung liegt vor allem darin, dass das Gewicht der Kraftfahrzeug-Elektrobatterien nicht mehr auf den Achsen 8.1 bis 8.3 ruht, sondern auf das Mehrkantbolzen-Auflager 12 und den Mehrkantbolzen-Anschlag 13 verteilt wird. Diese Gewichtsverteilung ermöglicht das Auflegen von sehr schweren Kraftfahrzeug-Elektrobatterien, ohne dass die Achsen 8.1 bis 8.3 der Klinken 7.1-7.3 in Mitleidenschaft gezogen werden.

### Bezugszeichenliste

| | |
|---|---|
| 1 | Seitenwange |
| 2 | Rückwand |
| 3 | Traverse |
| 4 | Fußplatte |
| 5 | Schutzstreifen |
| 6 | Gleitstreifen |
| 7 | Klinke |
| 8 | Achse |
| 9 | Tragteil |
| 10 | Rückteil |
| 11 | Puffer |
| 12 | Mehrkantbolzen-Auflager |
| 13 | Mehrkantbolzen-Anschlag |
| 14 | Kraftspeicher |
| 15 | Bolzen |
| 16 | Befestigung |
| 17 | Gestänge |
| | |
| a | Abstand |
| d | Dicke |
| E | Ebene |
| S | Stapelsäule |

## Patentansprüche

1. Stapelsäule zur Lagerung von Kraftfahrzeug-Elektrobatterien übereinander oder nebeneinander auf oder an Klinken (7.1-7.3), wobei die die Klinken (7.1-7.3) in einem U-Körper aufgenommen sind und der U-Körper zwei Seitenwangen (1.1, 1.2), eine Rückwand (2) und eine Öffnungskante aufweist, wobei die Klinken (7.1-7.3) um Achsen (8.1-8.3) von einer Ruhelage in Arbeitslage zwischen den zwei Seitenwangen (1.1,1.2) drehen und einerseits der Achse (8.1-8.3) ein Tragteil (9) und andererseits der Achse (8.1-8.3) ein Rückteil (10) aufweisen, wobei sich die Klinke (7.1-7.3) in Arbeitslage mit dem Rückteil (10) gegen einen Anschlag abstützt,
**dadurch gekennzeichnet,**
**dass** der Anschlag ein Mehrkantbolzen-Anschlag (13) oder ein Rundbolzen-Anschlag ist und das Auflager ein Mehrkantbolzen-Auflager (12) oder ein Rundbolzen-Auflager ist, wobei der Anschlag zwischen den beiden Seitenwangen (1.1, 1.2) mit an der Rückwand (2) angeordnet ist und das Tragteil (9) einem Auflager aufliegt, wobei das Mehrkantbolzen-Auflager (12) zwischen den beiden Seitenwangen (1.1, 1.2) an der Öffnungskante angeordnet ist, geeignet, das Tragteil (9) der Klinken (7.1-7.3) in Arbeitslage in einem Unterbereich durch das Auflager zu unterstützen, wobei gleichzeitig der Anschlag in einem Oberbereich des Rückteils (10) der Klinken (7.1-7.3) stützend anliegt, geeignet um die jeweilige Achse (8.1.-8.3) der Klinke (7.1-7.3) im Wesentlichen gewichtsfrei zu stellen.

2. Stapelsäule nach Anspruch 1, **dadurch gekennzeichnet, dass** das Mehrkantbolzen-Auflager (12) und/oder der Mehrkantbolzen-Anschlag (13) jeweils eine einzige Anliegefläche aufweisen, geeignet zur Stützung der Klinken (7.1-7.3) in Arbeitslage.

3. Stapelsäule nach Anspruch 2, **dadurch gekennzeichnet, dass** die Anliegefläche glatt oder verrippt ist.

4. Stapelsäule nach wenigstens einem der vorhergehenden Ansprüche, **dadurch gekennzeichnet, dass** der Mehrkantbolzen-Anschlag (13) und/oder das Mehrkantbolzen-Auflager (12) als Vierkantprofil oder Dreikantprofil ausgebildet ist/sind.

5. Stapelsäule nach wenigstens einem der vorhergehenden Ansprüche, **dadurch gekennzeichnet, dass** der Mehrkantbolzen-Anschlag (13) und das Mehrkantbolzen-Auflager (12) in Ebenen (E1, E2) zueinander angeordnet sind, deren Abstand (a) einer Dicke (d) der Klinke (7.1-7.3) entspricht.

6. Stapelsäule nach wenigstens einem der vorhergehenden Ansprüche, **dadurch gekennzeichnet, dass** dem Tragteil (9) frontwärtig ein Puffer (11) aufgesetzt ist.

7. Stapelsäule nach wenigstens einem der vorhergehenden Ansprüche, **dadurch gekennzeichnet, dass** die Klinken (7.1-7.3) über ein Gestänge (17) miteinander verbunden sind, welches bei Schwenken einer Klinke in die Arbeitslage die ihr nachfolgende Klinke aus der Ruhelage in eine Bereitschaftsstellung bringt.

8. Stapelsäule nach wenigstens einem der vorhergehenden Ansprüche, **dadurch gekennzeichnet, dass** das Rückteil (10) der Klinke (7.1-7.3) über einen Kraftspeicher (14), der einem Drehen der Klinke um ihre Achse (8.1-8.3) entgegenwirkt, mit einer Seitenwange (1.1,1.2) verbunden ist.

## Claims

1. Stacking column for storing motor vehicle electric batteries one above the other or next to one another on or at latches (7.1-7.3), wherein the latches (7.1-7.3) are received in a U-shaped body and the U-shaped body comprises two side walls (1.1, 1.2), a rear wall (2) and an opening edge, wherein the latches (7.1-7.3) rotate about axes (8.1-8.3) from a resting position into a working position between the two side walls (1.1, 1.2) and have a support part (9) on one side of the axis (8.1-8.3) and a rear part (10) on the other side of the axis (8.1-8.3), wherein the latch (7.1-7.3) in the working position is supported by the rear part (10) against a stop,
**characterized in that**,
the stop is a polygonal-bolt stop (13) or a round-bolt stop and the support is a polygonal-bolt support (12) or a round-bolt support, wherein the stop is arranged between the two side walls (1.1, 1.2) at the back wall (2) and the support part (9) rests on a support, wherein the polygonal-bolt support (12) is arranged between the two side walls (1.1, 1.2) at the opening edge, suitable for supporting the support part (9) of the latches (7.1-7.3) in the working position in a lower region by means of the support, while at the same time the stop rests in a supporting manner against an upper region of the rear part (10) of the latches (7.1-7.3), suitable for placing the respective axis (8.1-8.3) of the latch (7.1-7.3) substantially free of load.

2. Stacking column according to claim 1, **characterized in that** the polygonal-bolt support (12) and/or the polygonal-bolt stop (13) each have a single contact surface, suitable for supporting the latches (7.1-7.3) in the working position.

3. Stacking column according to claim 2, **characterized in that** the contact surface is smooth or ribbed.

4. Stacking column according to at least one of the preceding claims, **characterized in that** the polygonal-bolt stop (13) and/or the polygonal-bolt support (12) is/are formed as a square profile or a triangular profile.

5. Stacking column according to at least one of the preceding claims, **characterized in that** the polygonal-bolt stop (13) and the polygonal-bolt support (12) are arranged in planes (E1, E2) relative to one another, the spacing (a) of which corresponds to a thickness (d) of the latch (7.1-7.3).

6. Stacking column according to at least one of the preceding claims, **characterized in that** a buffer (11) is mounted on the support part (9) on the front side.

7. Stacking column according to at least one of the preceding claims, **characterized in that** the latches (7.1-7.3) are connected to one another by a linkage (17) which, upon pivoting of one latch into the working position, brings the subsequent latch from the rest position into a readiness position.

8. Stacking column according to at least one of the preceding claims, **characterized in that** the rear part (10) of the latch (7.1-7.3) is connected to a side wall (1.1, 1.2) via a force accumulator (14) which counteracts a rotation of the latch about its axis (8.1-8.3).

## Revendications

1. Colonne d'empilement pour le stockage de batteries électriques de véhicules automobiles les unes au-dessus des autres ou les unes à côté des autres sur ou contre des cliquets (7.1-7.3),
dans laquelle
les cliquets (7.1-7.3) sont logés dans un corps en U, et le corps en U présente deux joues latérales (1.1, 1.2), une paroi arrière (2) et un bord d'ouverture,
les cliquets (7.1-7.3) sont aptes à tourner autour d'axes (8.1-8.3) d'une position de repos à une position de travail entre les deux joues latérales (1.1, 1.2) et comportent, sur un côté de l'axe (8.1-8.3), un élément porteur (9) et, sur l'autre côté de l'axe (8.1-8.3), un élément arrière (10),
en position de travail, le cliquet (7.1-7.3) s'appuie par son élément arrière (10) contre une butée,
**caractérisée en ce que**
la butée est une butée à goujon polygonal (13) ou une butée à goujon rond, et le support est un support à goujon polygonal (12) ou un support à goujon rond,
la butée est disposée entre les deux joues latérales (1.1, 1.2) au niveau de la paroi arrière (2), et l'élément porteur (9) repose sur un support,
le support à goujon polygonal (12) est disposé entre les deux joues latérales (1.1, 1.2) au niveau du bord d'ouverture, de manière à soutenir l'élément porteur (9) des cliquets (7.1-7.3) en position de travail dans une zone inférieure, grâce au support,
la butée s'appuie simultanément dans une zone supérieure de l'élément arrière (10) des cliquets (7.1-7.3) pour les soutenir, de manière à libérer sensiblement de tout poids l'axe respectif (8.1-8.3) du cliquet (7.1-7.3).

2. Colonne d'empilement selon la revendication 1,
**caractérisée en ce que** le support à goujon polygonal (12) et/ou la butée à goujon polygonal (13) présentent chacun une seule surface d'appui, adaptée pour soutenir les cliquets (7.1-7.3) en position de travail.

3. Colonne d'empilement selon la revendication 2,
**caractérisée en ce que** la surface d'appui est lisse ou nervurée.

4. Colonne d'empilement selon l'une au moins des revendications précédentes,
**caractérisée en ce que** la butée à goujon polygonal (13) et/ou le support à goujon polygonal (12) est/sont réalisé(e)(s) sous forme de profilé carré ou de profilé triangulaire.

5. Colonne d'empilement selon l'une au moins des revendications précédentes,
**caractérisée en ce que** la butée à goujon polygonal (13) et le support à goujon polygonal (12) sont disposés l'un par rapport à l'autre dans des plans (E1, E2) dont la distance (a) correspond à l'épaisseur (d) du cliquet (7.1-7.3).

6. Colonne d'empilement selon l'une au moins des revendications précédentes,
**caractérisée en ce qu'**un tampon (11) est placé à l'avant de l'élément porteur (9).

7. Colonne d'empilement selon l'une au moins des revendications précédentes,
**caractérisée en ce que** les cliquets (7.1-7.3) sont reliés entre eux par une tringlerie (17) qui, lorsqu'un cliquet bascule vers la position de travail, amène le cliquet suivant de la position de repos à une position d'attente.

8. Colonne d'empilement selon l'une au moins des revendications précédentes,
**caractérisée en ce que** l'élément arrière (10) du cliquet (7.1-7.3) est relié à une joue latérale (1.1, 1.2) par l'intermédiaire d'un accumulateur d'énergie (14) qui s'oppose à la rotation du cliquet autour de son axe (8.1-8.3).
